# EUROPEAN PATENT SPECIFICATION

(11) **EP 2 818 270 B1**
(45) Date of publication and mention of the grant of the patent: **19.07.2017**
(21) Application number: 14160202.9
(22) Date of filing: 17.03.2014
(51) Int. Cl.: B23H 7/26, B23Q 3/18, B23Q 16/08

(54) **Positioning board of chuck**
Positionierungsplatte von Spannfutter
Carte de positionnement de mandrin

(30) Priority: 26.06.2013 TW 102122774
(43) Date of publication of application: 31.12.2014
(73) Proprietor: Cherng Jin Technology Co., Ltd., 500 Changhua City (TW)
(72) Inventor: Lin, Chien-Chih, 500 Changhua City, Changhua County (TW)
(74) Representative: Viering, Jentschura & Partner mbB Patent- und Rechtsanwälte

(56) References cited:
- EP-A1- 1 364 746
- EP-A1- 2 036 661
- DE-C1- 3 729 601
- DE-U1- 8 335 033
- DE-U1- 29 802 835
- GB-A- 2 462 132
- US-A1- 2008 135 528

## Description

### BACKGROUND OF THE INVENTION

### 1. Technical Field

The present invention relates to a machine tool, and more particularly to a positioning board of a chuck. Such a positioning board, according to the preamble of independent claim 1, is known from document EP 1 364 746 A.

### 2. Description of Related Art

In the field of machine tool, a conventional electrode chuck usually has a first base and a second base. The first base is affixed to the machine tool, and the second base is designed to hole an object. Typically, the electrode chuck may hold different objects, so that there usually are a plurality of different second bases to hold different objects. These second bases are able to engage and disengage the first base. For repeated engagement and disengagement, the wearing between the first and second base will cause a loose engagement of the second base with the first base, and the loose engagement will decrease the precision of the machine tool.

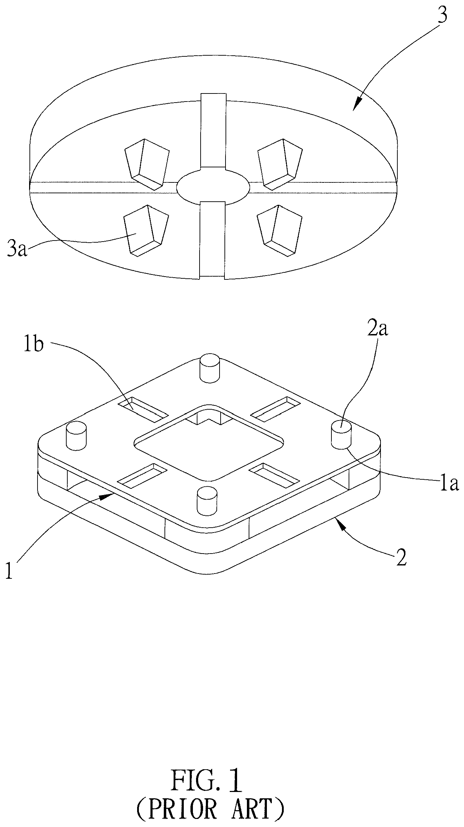

Typically, a positioning board is provided between the first base and the second base to fix the problem of loose engagement. FIG. 1 shows a conventional positioning board 1, which has several bores 1a to engage posts 2a of a first base 2 and a plurality of elongated slots 1b to engage posts 3a of a second base 3. The posts 3a of the second base 3 are flat, and a thickness thereof gradually reduces from a root to a tip thereof. With such posts 3a and the elongated slots 1b, it may correct the position of the second base 3 in the engagement with the first base 2.

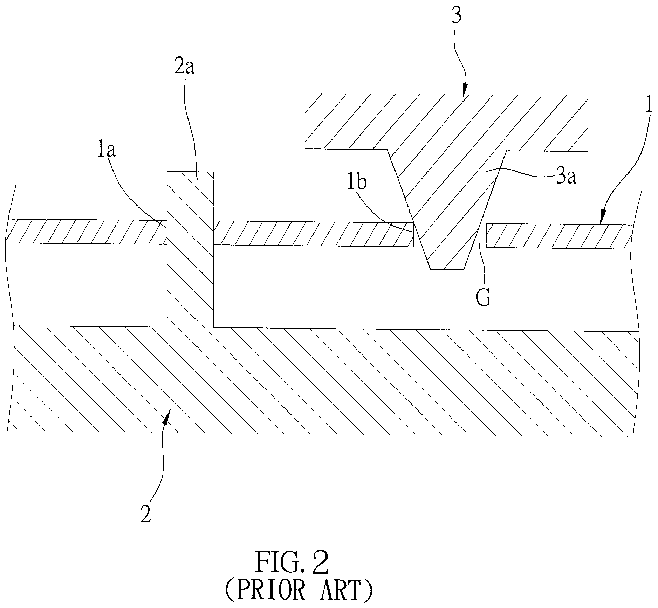

In order to correct the position of the second base 3, the positioning board must be a rigid board with a predetermined thickness. Such positioning board, however, will cause a friction between the posts 3a and sidewalls of the elongated slots 1b. As a result, referring to FIG. 2, each post 3a only have a short potion received in the slot 1b that is insufficient for a stable engagement of the second base 3. Besides, each post 3a only has a side contacting the sidewall of the slot 1b, and there is a gas G left between the other side of the post 3a and the other sidewall of the slot 1b. The gaps are bad for the precise engagement as well.

### BRIEF SUMMARY OF THE INVENTION

In view of the above, the primary objective of the present invention is to provide a positioning board of a chuck, which provides precise engagement of the bases of the chuck.

In order to achieve the objective of the present invention, a positioning board for a chuck according to independent claim 1 is provided.

The positioning slot of the positioning board provides a precise engagement of the first base with the second base.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a perspective view of the conventional chuck;
FIG. 2 is a sectional view of the conventional chuck, showing the engagement of the positioning board with the second base;
FIG. 3 is a perspective view of a first preferred embodiment of the present invention;
FIG. 4 is a sectional view of the first preferred embodiment of the present invention, showing the engagement of the positioning board with the second base;
FIG. 5 is a sectional view of a second preferred embodiment of the present invention, showing the engagement of the positioning board with the second base;
FIG. 6 is a sectional view of a third preferred embodiment of the present invention, showing the engagement of the positioning board with the second base; and
FIG. 7 is a perspective view of the third preferred embodiment of the present invention.

### DETAILED DESCRIPTION OF THE INVENTION

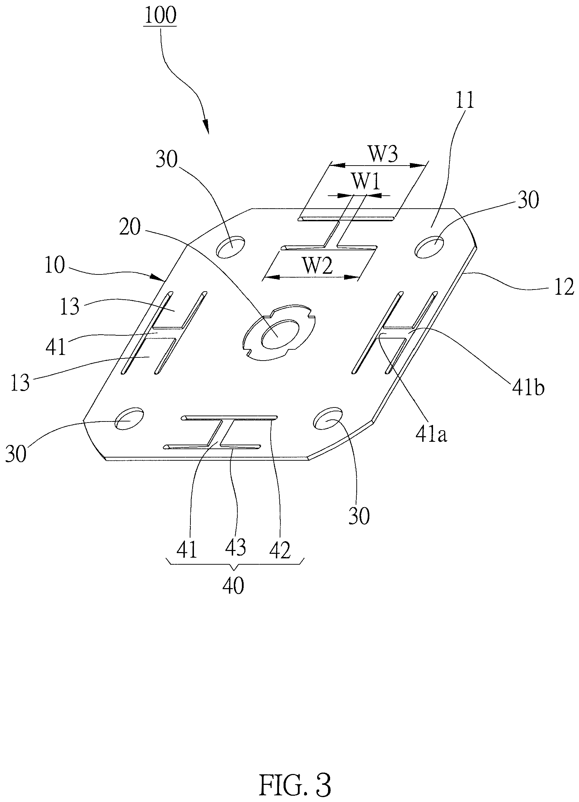

FIG. 3 shows a positioning board 100 of the first preferred embodiment of the present invention, which includes a board member 10 with a central bore 20, a plurality of positioning bores 30, and a plurality of positioning slots 40.

The board member 10 is a rectangular rigid board with a predetermined thickness. The board member 10 has a first side 11 and a second side 12 opposite to the first side 11.

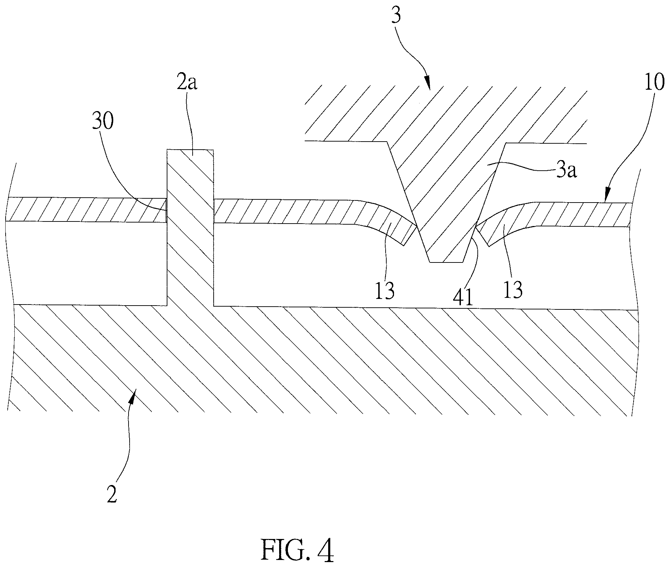

The central bore 20 is a round through hole at a center of the board member 10, and the positioning bores 30 are four round through holes at corners of the board member 10. As shown in FIG. 4, the positioning board 100 is provided between a first base 2 and a second base 3 of a chuck. The first base 2 has several posts 2a for engagement with the positioning bores 30 of the positioning board 100 respectively to firmly affix the board member 10 to the first base 2.

The positioning slots 40 are elongated through holes at a margin of the board member 10. The positioning slots 40 are aligned with posts 3a of the second base 3 respectively. Each positioning slot 40 has a main slot 41, a first sub-slot 42 and a second sub-slot 43. The main slot 41 is designed for engaging the post 3a. The main slot 41 has a first end 41a and a second end 41b. The first sub-slot 42 is parallel to the second sub-slot 43, and both of them are perpendicular to the main slot 41. The first sub-slot 42 is connected to the first end 41a of the main slot 41, and the second sub-slot 43 is connected to the second end 41b. As shown in FIG. 3, the main slot 41 is connected to middle of the first and the second sub-slots 42, 43, so that the positioning slots 40 are H-shaped slots, and two flexible tongues 13 are formed at opposite sides of the main slot 41. Precisely, a width of the main slot 41 is W1, a length of the first sub-slot 42 is W2, and a length of the second sub-slot 43 is W3. W2 and W3 are equal to or greater than twice of W1. In an embodiment, W1 is 5mm, and W2 and W3 are 10mm. It provides the flexible tongues 13 a suitable flexibility.

As shown in FIG. 4, the posts 3a of the second base 3 are aligned with the main slots 41 of the positioning slots 40 and engage the main slots 41 respectively while the second base 3 is moved toward the first base 2. At the same time, the post 3a bends the flexible tongues 13, and is squeezed into the main slot 41. The flexible tongues 13 provide no gap between the posts 3a and the sidewalls of the positioning slots 40 to give a precise engagement of the first base 2 with the second base 3.

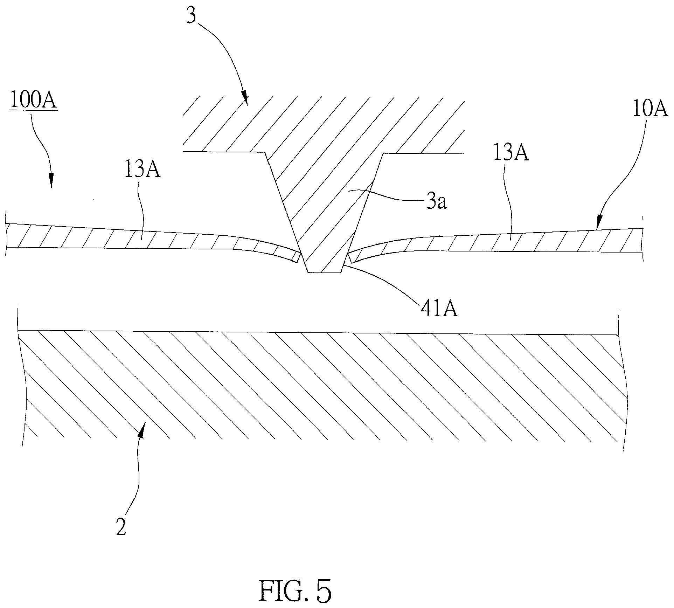

FIG. 5 shows a positioning board 100A of the second preferred embodiment of the present invention, which is similar to the first preferred embodiment, except that a thickness of each flexible tongue 13A on a board member 10A gradually reduces from a root to a distal end thereof. In other words, the thickness of each flexible tongue 13A is gradually thinner towards a main slot 41A. Therefore, the flexible tongue 13A has a high flexibility at the distal end and a high rigidity at the root. It may provide a precise and firm positioning function.

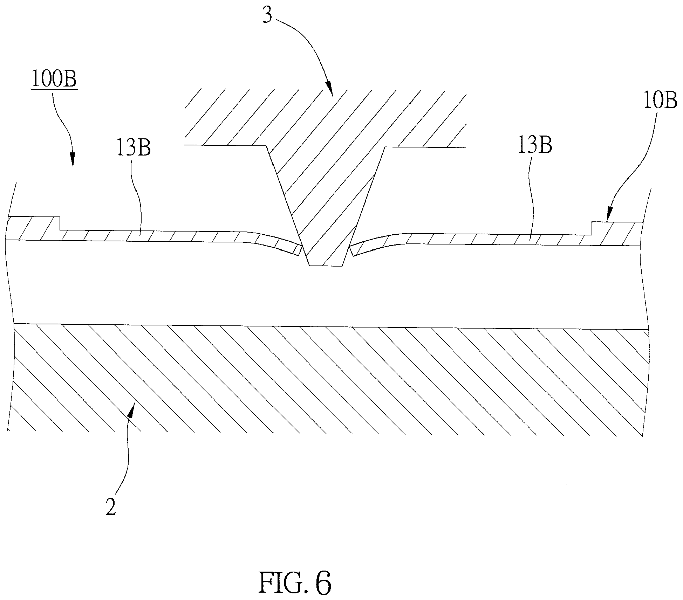

FIG. 6 shows a positioning board 100B of the third preferred embodiment of the present invention, which is similar to the first and the second preferred embodiments, except that each flexible tongue 13B on a board member 10B has an even thickness and is thinner a thickness of the board member 10B. The positioning board 100B of the third preferred embodiment has the same function as above.

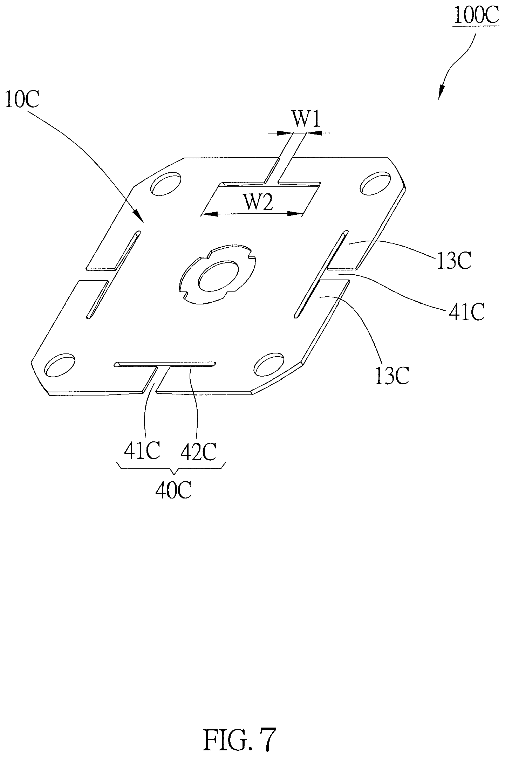

FIG. 7 shows a positioning board 100C of the fourth preferred embodiment of the present invention, which is similar to the first preferred embodiment, except that a board member 10C has a plurality of T-shaped positioning slots 40C. Each positioning slot 40C has a main slot 41C and a sub-slot 42C at an end of the main slot 41C. The other end of the main slot 41C extends to an edge of the board member 10C, so that two flexible tongues 13C are formed for each positioning slot 40C. A width of the main slot 41 C is W1, and a length of the sub-slot 42C is W2. W2 is greater than or equal to twice of W1. It provides the flexible tongues 13C a predetermined flexibility for the same purpose as above. The flexible tongues 13C may have a gradually reduced thickness or an even thickness as shown in FIG. 5 and FIG. 6.

It must be pointed out that the embodiments described above are only some preferred embodiments of the present invention.

## Claims

1. A positioning board (100, 100A, 100B, 100C) for a chuck, comprising:
a board member (10), which has a first side (11) and a second side (12) opposite to the first side (11), having a plurality of positioning bores (30) and a plurality of positioning slots (40), wherein the positioning bores and the positioning slots are all open at the first side (11) and the second side (12);
wherein each of the positioning slots (40) has a main slot (41, 41A, 41C) and a first sub-slot (42, 42C); and the main slot (41, 41A, 41C) has two opposite ends (41a, 41b), **characterised in that** the first sub-slot (42, 42C) is connected to one of the ends (41a) of the main slot (41, 41A, 41C) with a middle thereof to form two flexible tongues (13, 13A, 13B, 13C) at opposite sides of the main slot (41, 41A, 41C); and the first sub-slot (42, 42C) is not parallel to the main slot (41, 41A, 41C).

2. The positioning board (100, 100A, 100B, 100C) of claim 1, wherein the first sub-slot (42, 42C) is perpendicular to the main slot (41, 41A, 41C).

3. The positioning board (100A, 100B, 100C) of claim 2, wherein the end (41b) of the main slot (41A, 41C) which is not connected to the middle of the first sub-slot (42C) extends to an edge of the board member (10C).

4. The positioning board (100B) of claim 3, wherein each flexible tongue (13B) has an even thickness, and the thickness of the flexible tongue (13B) is thinner than that of the board member (10B).

5. The positioning board (100A) of claim 3, wherein each flexible tongue (13A) has a root and a distal end adjacent to the main slot (41A), and a thickness of the flexible tongue (13A) gradually reduces from the root to the distal end.

6. The positioning board (100, 100C) of claim 2, wherein a length of the first sub-slot (42, 42C) is greater than or equal to twice of a width of the main slot (41, 41C).

7. The positioning board (100, 100A, 100B) of claim 2, wherein the positioning slot (40) further has a second sub-slot (43) connected to the end (41b) of the main slot (41), which is opposite to the end (41a) of the main slot (41, 41A) connected to the first sub-slot (42), with a middle thereof, so that the two flexible tongues (13, 13A, 13B) are formed at opposite sides of the main slot (41, 41A); the second sub-slot (43) is not parallel to the main slot (41, 41A).

8. The positioning board (100, 100A, 100B) of claim 7, wherein the second sub-slot (43) is parallel to the first sub-slot (42), and both the first sub-slot (42) and the second sub-slot (43) are perpendicular to the main slot (41).

9. The positioning board (100B) of claim 7, wherein each flexible tongue (13B) has an even thickness, and the thickness of the flexible tongue (13B) is thinner than that of the board member (10B).

10. The positioning board (100A) of claim 7, wherein each flexible tongue (13A) has a root and a distal end adjacent to the main slot (41A), and a thickness of the flexible tongue (13A) gradually reduces from the root to the distal end.

11. The positioning board (100, 100A, 100B) of claim 7, wherein a length of the first sub-slot (42) is greater than or equal to twice of a width of the main slot (41, 41A), and a length of the second sub-slot (43) is greater than or equal to twice of the width of the main slot (41, 41A).

## Patentansprüche

1. Positionierplatte (100, 100A, 100B, 100C) für ein Spannfutter, umfassend:
ein Plattenelement (10), das eine erste Seite (11) und eine der ersten Seite (11) gegenüberliegende zweite Seite (12) mit einer Mehrzahl an Positionierbohrungen (30) und einer Mehrzahl an Positionierschlitzen (40) aufweist, wobei die Positionierbohrungen und die Positionierschlitze alle an der ersten Seite (11) und der zweiten Seite (12) offen sind,
wobei jeder der Positionierschlitze (40) einen Hauptschlitz (41, 41A, 41C) und einen ersten Nebenschlitz (42, 42C) aufweist, und der Hauptschlitz (41, 41A, 41C) zwei gegenüberliegende Enden (41a, 41b) aufweist, **dadurch gekennzeichnet, dass** der erste Nebenschlitz (42, 42C) mit einem der Enden (41a) des Hauptschlitzes (41, 41A, 41C) in einer Mitte davon verbunden ist, um zwei flexible Zungen (13, 13A, 13B, 13C) an gegenüberliegenden Seiten des Hauptschlitzes (41, 41A, 41C) auszubilden, und der erste Nebenschlitz (42, 42C) nicht parallel zum Hauptschlitz (41, 41A, 41C) verläuft.

2. Positionierplatte (100, 100A, 100B, 100C) nach Anspruch 1, wobei der erste Nebenschlitz (42, 42C) senkrecht zum Hauptschlitz (41, 41A, 41C) verläuft.

3. Positionierplatte (100A, 100B, 100C) nach Anspruch 2, wobei das Ende (41b) des Hauptschlitzes (41A, 41C), das nicht mit der Mitte des ersten Nebenschlitz (42C) verbunden ist, sich zu einer Kante des Plattenelements (10C) erstreckt.

4. Positionierplatte (100B) nach Anspruch 3, wobei jede flexible Zunge (13B) eine gleichmäßige Dicke aufweist und die Dicke der flexiblen Zunge (13B) dünner als die des Plattenelements (10B) ist.

5. Positionierplatte (100A) nach Anspruch 3, wobei jede flexible Zunge (13A) eine Wurzel und ein distales Ende benachbart zum Hauptschlitz (41A) aufweist und eine Dicke der flexiblen Zunge (13A) allmählich von der Wurzel zum distalen Ende hin abnimmt.

6. Positionierplatte (100, 100C) nach Anspruch 2, wobei eine Länge des ersten Nebenschlitzes (42, 42C) größer oder gleich dem Doppelten einer Breite des Hauptschlitzes (41, 41 C) ist.

7. Positionierplatte (100, 100A, 100B) nach Anspruch 2, wobei der Positionierschlitz (40) ferner einen zweiten Nebenschlitz (43) aufweist, der mit dem Ende (41 b) des Hauptschlitzes (41) verbunden ist, das dem mit dem ersten Nebenschlitz (42) verbundenen Ende (41a) des Hauptschlitzes (41, 41A) gegenüberliegend in einer Mitte davon angeordnet ist, so dass die beiden flexiblen Zungen (13, 13A, 13B) an gegenüberliegenden Seiten des Hauptschlitzes (41, 41A) ausgebildet sind und der zweite Nebenschlitz (43) nicht parallel zum Hauptschlitz (41, 41A) verläuft.

8. Positionierplatte (100, 100A, 100B) nach Anspruch 7, wobei der zweite Nebenschlitz (43) parallel zum ersten Nebenschlitz (42) verläuft und sowohl der erste Nebenschlitz (42) als auch der zweite Nebenschlitz (43) senkrecht zum Hauptschlitz (41) verläuft.

9. Positionierplatte (100B) nach Anspruch 7, wobei jede flexible Zunge (13B) eine gleichmäßige Dicke aufweist und die Dicke der flexiblen Zunge (13B) dünner als die des Plattenelements (10B) ist.

10. Positionierplatte (100A) nach Anspruch 7, wobei jede flexible Zunge (13A) eine Wurzel und ein distales Ende benachbart zum Hauptschlitz (41A) aufweist und eine Dicke der flexiblen Zunge (13A) allmählich von der Wurzel zum distalen Ende hin abnimmt.

11. Positionierplatte (100, 100A, 100B) nach Anspruch 7, wobei eine Länge des ersten Nebenschlitzes (42) größer oder gleich dem Doppelten einer Breite des Hauptschlitzes (41, 41A) ist und eine Länge des zweiten Nebenschlitz (43) größer oder gleich dem Doppelten der Breite des Hauptschlitzes (41, 41A) ist.

## Revendications

1. Carte de positionnement (100, 100A, 100B, 100C) d'un mandrin, comprenant :
un élément carte (10), qui présente un premier côté (11) et un second côté (12) opposé au premier côté (11), présentant une pluralité d'alésages de positionnement (30) et une pluralité de fentes de positionnement (40) ;
dans laquelle les alésages de positionnement et les fentes de positionnement sont tous ouverts au niveau du premier côté (11) et du second côté (12);
dans laquelle chacune des fentes de positionnement (40) présente une fente principale (41, 41A, 41C) et une première fente secondaire (42, 42C) ; et
la fente principale (41, 41A, 41C) présente deux extrémités opposées (41a, 41b), **caractérisée en ce que** :
la première fente secondaire (42, 42C) est connectée à l'une des extrémités (41a) de la fente principale (41, 41A, 41C) au milieu de celle-ci de façon à former deux languettes souples (13, 13A, 13B, 13C) au niveau des côtés opposés de la fente principale (41, 41 A, 41 C) ; et
la première fente secondaire (42, 42C) n'est pas parallèle à la fente principale (41, 41A, 41C).

2. Carte de positionnement (100, 100A, 100B, 100C) selon la revendication 1, dans laquelle la première fente secondaire (42, 42C) est perpendiculaire à la fente principale (41, 41 A, 41 C).

3. Carte de positionnement (100A, 100B, 100C) selon la revendication 2, dans laquelle l'extrémité (41b) de la fente principale (41A, 41C) qui n'est pas connectée au milieu de la première fente secondaire (42C), s'étend vers un bord de l'élément carte (10C).

4. Carte de positionnement (100B) selon la revendication 3, dans laquelle chaque languette souple (13B) présente une même épaisseur, et l'épaisseur de la languette souple (13B) est plus mince que celle de l'élément carte (10B).

5. Carte de positionnement (100A) selon la revendication 3, dans laquelle chaque languette souple (13A) présente une racine et une extrémité distale adjacente à la fente principale (41A), et une épaisseur de la languette souple (13A) diminue de manière progressive à partir de la racine vers l'extrémité distale.

6. Carte de positionnement (100, 100C) selon la revendication 2, dans laquelle une longueur de la première fente secondaire (42, 42C) est supérieure ou égale à deux fois une largeur de la fente principale (41, 41C).

7. Carte de positionnement (100, 100A, 100B) selon la revendication 2, dans laquelle la fente de positionnement (40) présente en outre une seconde fente secondaire (43) connectée à l'extrémité (41b) de la fente principale (41), qui est opposée à l'extrémité (41a) de la fente principale (41, 41A) connectée à la première fente secondaire (42), au milieu de celle-ci, de telle sorte que les deux languettes souples (13, 13A, 13B) soient formées au niveau des côtés opposés de la fente principale (41, 41A); la seconde fente secondaire (43) n'est pas parallèle à la fente principale (41, 41A).

8. Carte de positionnement (100, 100A, 100B) selon la revendication 7, dans laquelle la seconde fente secondaire (43) est parallèle à la première fente secondaire (42), et la première fente secondaire (42) et la seconde fente secondaire (43) sont perpendiculaires à la fente principale (41).

9. Carte de positionnement (100B) selon la revendication 7, dans laquelle chaque languette souple (13B) présente une même épaisseur, et l'épaisseur de la languette souple (13B) est plus mince que celle de l'élément carte (10B).

10. Carte de positionnement (100A) selon la revendication 7, dans laquelle chaque languette souple (13A) présente une racine et une extrémité distale adjacente à la fente principale (41A), et une épaisseur de la languette souple (13A) diminue de manière progressive à partir de la racine vers l'extrémité distale.

11. Carte de positionnement (100, 100A, 100B) selon la revendication 7, dans laquelle une longueur de la première fente secondaire (42) est supérieure ou égale à deux fois une largeur de la fente principale (41, 41A), et une longueur de la seconde fente secondaire (43) est supérieure ou égale à deux fois la largeur de la fente principale (41, 41A).
